# EUROPEAN PATENT SPECIFICATION

(11) **EP 0 466 670 B1**
(45) Date of publication and mention of the grant of the patent: **27.08.1997**
(21) Application number: 91850171.9
(22) Date of filing: 20.06.1991
(51) Int. Cl.: G11B 7/00, G11B 7/24

(54) **Optical phase change recording**
Optische Aufzeichnung mit Phasenänderung
Enregistrement optique à variation de phase

(30) Priority: 13.07.1990 US 554052
(43) Date of publication of application: 15.01.1992
(73) Proprietor: International Business Machines Corporation, Armonk, N.Y. 10504 (US)
(72) Inventor: Chen, Martin Yu-Wen, San Jose, CA 95120 (US); Rubin, Kurt Allan, Santa Clara, CA 95050 (US)
(74) Representative: Burt, Roger James, Dr.

(56) References cited:
- EP-A- 0 181 005
- EP-A- 0 212 336
- EP-A- 0 347 801
- PATENT ABSTRACTS OF JAPAN vol. 13, no. 306 (P-897)13 July 1989 & JP-A-1 079 973

## Description

### Technical Field

### Background of the Invention

This invention relates to optical recording media and more particularly to optical phase change media.

### Description of the Prior Art

The two most popular methods of reversible optical recording are magneto-optic recording and phase change recording. In magneto-optic recording, the recording medium has an active or recording layer which may be magnetized in either an up or down position when a laser beam heats the material above a certain temperature. The recorded data is read from the medium by use of a low powered laser beam which provides polarized light which is reflected off of the medium. The different directions of magnetization in the medium cause the plane of polarization of the light to be rotated in one direction or the other. This is known as the Kerr effect. These differences in rotation are detected as data ones and zeros.

In contrast to magneto-optic recording, phase change recording directly uses differences in the reflectivity of the medium to detect data. Phase change media are usually comprised of a transparent substrate, an undercoat, an active layer and an overcoat. The active or recording layer has a crystalline state, a liquid state and an amorphous state. Initially, the active layer is in the crystalline state. The amorphous state is formed by heating a portion or spot of the active layer with a high power laser pulse of short duration to a temperature above its melting point to change it to a liquid state. If the spot cools sufficiently rapidly it changes to the amorphous state. When an amorphous spot is heated with a lower powered laser, the amorphous material returns to it's crystalline state. To read the medium, a very low power laser is reflected off of the active layer. The crystalline state has a higher reflectivity than the amorphous state and this difference in reflectivity is detected as data ones and zeros.

Some examples of prior art optical media include US 4,216,501 issued August 5, 1980 to Bell; US 4,576,895 issued March 18, 1986 to Barton, et al.; US 4,635,245 issued January 6, 1987 to Smith; US 4,644,519 issued February 17, 1987 to Markvoort, et al.; US 4,660,175 issued April 21, 1987 to Strand; US 4,709,363 issued November 24, 1987 to Dirks, et al.; US 4,719,594 issued January 12, 1988 to Young, et al.; and US 4,839,883 issued June 13, 1989 to Nagata, et al.

One problem encountered with these prior art phase change media is that they have a very limited cycle life. After a certain number of write and erase cycles, the media start to degrade until they can no longer be written or read reliably. It is believed that repeated high temperatures during the writing (amorphization) process are responsible for the limited cycle life.

When a disk is written upon (amorphized), a high powered laser is focused onto the medium. The medium is initially in the crystalline state. The laser light focused on the medium has a Gaussian shaped intensity profile. The temperature is hottest at the center of the laser spot on the disk, while the edge of the molten spot is at the melting point of the medium. Typically, the diameter of a written spot is equal to the diameter of the molten spot, which in turn is approximately equal to the full width at half the maximum intensity of the laser beam (FWHM). The center of the spot will reach more than twice the temperature of the melting point.

An additional temperature problem is caused by the difference in reflectivities of the different states. If the active layer is (GeTe)₈₅Sn₁₅, otherwise known as GTS, then the melting point is 725°C. The reflectivity of the amorphous state of GTS is only 28% compared to 40% for the crystalline state. The reflectivity of the liquid state is approximately equal to the reflectivity of the amorphous state. This means that once the spot becomes liquid or molten, it will absorb even more light and will become even hotter.

For a medium made of GTS, temperatures of 1740°C in the center of the spot are estimated. At this temperature, the medium boils due to vapor pressure of the active layer and contaminates become a significant factor in causing stress on the film. Also, thermal expansion differences can become important. Either of these effects can result in delamination occurring at one of the interfaces between the different layers of the medium. This repeated process of writing and erasing limits the life of the medium. What is needed is a phase change medium with an improved cycle life.

European Patent application EP-A-0347801 discloses optical recording media including an active layer of optical change material, a dielectric layer overlying the active layer and a reflective layer overlying the dielectric layer. The reflectivity of the medium in the amorphous state is made greater than the reflectivity in the crystalline state by choosing active layer materials which have a larger refractive index in the amorphous state. Materials having opposite refractive index properties (eg GeTe) are described as being unsuitable for producing the desired reflectivity characteristics.

### Summary of the Present Invention

Towards this end and according to the invention, an optical phase change medium comprises a substrate, an undercoat layer, an active layer having a liquid and a crystalline state, a dielectric layer, and a reflective layer. The active layer has a thickness which will allow the transmission of incident light.
The dielectric layer has a thickness such that the light passing through the active layer is reflected by the reflective layer and destructively interferes with the light reflected directly off the active layer in a way that the reflectivity of the liquid state will be higher than that of the crystalline state. The result is that media will experience a greatly reduced temperature during writing because the melted media will absorb less light.

For a fuller understanding of the nature and advantages of the present invention reference should be made to the following detailed description taken in conjunction with the accompanying drawings.

### Brief Description of the Drawings

Fig. 1 is a schematic cross sectional view of an optical phase change medium of the prior art;
Fig. 2 is a schematic cross sectional view of the optical phase change medium of the present invention;
Fig. 3 is a graph of active layer thickness versus dielectric layer thickness at different absorption ratios;
Fig. 4 is a graph of the reflectivity versus dielectric thickness for the present invention;
Fig. 5 is a graph of contrast ratio versus dielectric layer thickness for the present invention;
Fig. 6 is a graph of absorption ratio versus dielectric layer thickness for the present invention;
Fig. 7 is a graph of minimum absorption ratios versus dielectric layer thickness for various reflector materials for the present invention;
Fig. 8 is a graph of the temperature versus spot position; and
Fig. 9 is a schematic diagram of a data storage system using the medium of the present invention.

### Description of the Preferred Embodiments

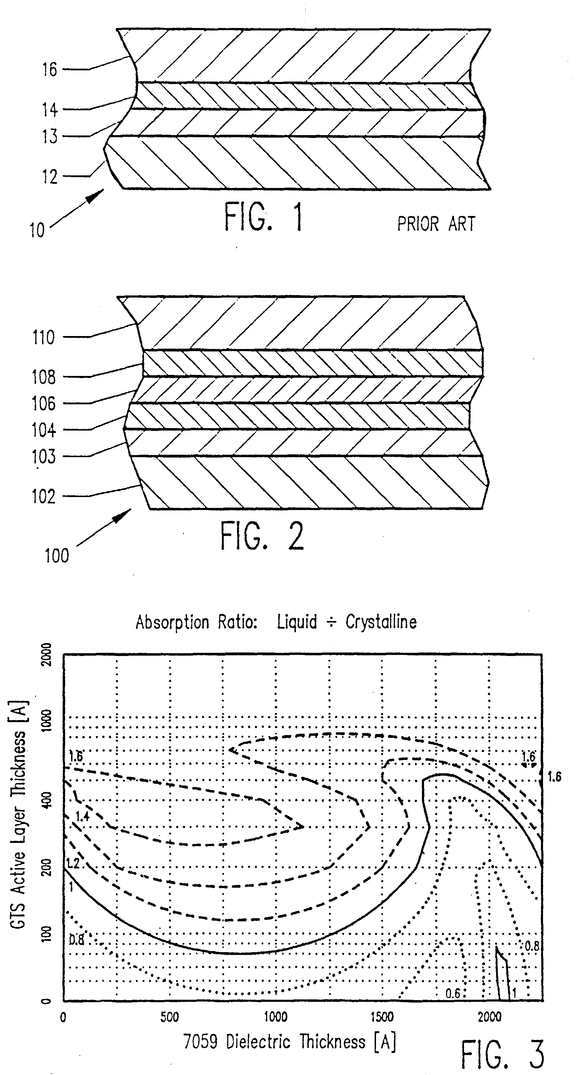

Fig. 1 shows a schematic cross sectional view of one example of an optical phase change medium of the prior art and is designated by the general reference number 10. Medium 10 comprises a substrate 12 which is made of glass or a transparent plastic such as polycarbonate. The substrate 12 is typically 1.2mm thick. An optional undercoat layer 13 is located on substrate 12. Layer 13 is made of a dielectric material and is typically 200 nm (2000 Å) thick.

An active layer 14 is located on top of layer 13. Active layer 14 is made of a chalcogenide material. In their bulk or ordinary condition these materials have a crystalline state which is more reflective than the amorphous or liquid state. In other words, the bulk reflectivity of the crystalline state is greater than the bulk reflectivity of the amorphous state. One such material is GTS. The active layer 14 is typically 40-100 nm (400 Å - 1000 Å) thick.

An overcoat layer 16 is located above active layer 14. Overcoat layer 16 is made of a low thermal conducting, high melting point dielectric material such as glass and is usually approximately 200 nm (2000 Å) thick. The overcoat layer 16 constrains the active layer from flowing while it is liquid.

In order to write on (amorphize) media 10, a laser beam is passed through substrate 12 to active layer 14. The active layer 14 is initially in the crystalline state. The laser heats a spot on the active layer to above its melting point and changes it to a liquid state. Once the laser light is removed the spot will cool to the amorphous state from which the data will later be read. For GTS the melting point is 725 C. GTS is 28% and 49% reflective of 647nm light, in the liquid and crystalline states, respectively. The absorption of the liquid and crystalline states are 72% and 51%, respectively. The sum of the reflectivity (R) and absorption (A) of a material is equal to one. The laser beam pattern on the disk has a Gaussian intensity profile, i.e. the beam is more intense at the center and less intense at the edges of the spot on the disk.

The diameter of the recorded spot is approximately equal to the full width at half the maximum intensity (FWHM), i.e. the diameter at the location in the beam pattern where the light is half the intensity of the maximum intensity of the light in the center of the beam. The temperature at the center will be at least twice the melting point temperature at the edge. The relative absorption of the liquid and crystalline states increases the temperature even further. Once the crystalline state is changed to the liquid state, the absorption rate jumps from 51% to 72%. The result is that for GTS, the temperature at the center of the beam pattern can reach 1740°C. At this temperature degradation of the media occurs and cycle life is limited.

The present invention results in a structure which minimizes the ratio of light absorbed by the liquid or amorphous state (Al) to that of the light absorbed by the crystalline state (Ax). This ratio, Al/Ax will be referred to as Ar.

Minimization of Ar results in a form of heating rate governor which reduces the temperature rise of the molten region during laser illumination. The invented structure is designed so that the active layer is part of an optical interference structure that has less light absorption in the liquid state than in the crystalline state. This allows the laser light to heat the crystalline state to it's melting point more quickly. Once the material melts, the higher reflectivity molten part of the spot absorbs less laser light so that the heating rate drops dramatically. The melted part of the spot does not continue to heat as fast as the surrounding, not yet melted, crystalline region of the spot.

Fig. 2 shows a schematic cross sectional view of an optical phase change medium of the present invention and is designated by the general reference number 100. Medium 100 comprises a substrate 102 which may be made of glass or a transparent plastic such as polycarbonate. Other materials which may be used for the substrate include polymethylmethacylate, amorphous polyolefin, polycarbonate/polystyrene blends, epoxies, polycarbonate/monomer blends and methylmethacylate blends. Substrate 100 is preferably 1.2 mm thick. An optional undercoat layer 103 may be located above substrate 102. The preferred embodiment of layer 103 is made of glass or other suitable dielectric material and is preferably 150 to 350 nm (1500 to 3500 Å) thick.

An active layer 104 is located on top of layer 103. Active layer 104 may be made of a chalcogenide material such as GTS. Layer 104 may be 10 nm (100 Å) thick in the preferred embodiment.

A transparent dielectric layer 106 is located on top of layer 104. Dielectric layer 106 may be made of 7059 glass or other suitable dielectric material and is 175 nm (1750 Å) thick in a preferred embodiment.

A reflective layer 108 is located on top of layer 106. Reflective layer 108 may be made of a metallic material such as aluminum, silver or copper or other highly reflective materials. The reflective layer 108 is 1000 Å thick in the preferred embodiment.

An overcoat layer 110 is located on top of layer 108. The preferred embodiment of layer 110 is made of glass or other suitable dielectric material and is 1 mm thick.

The medium 100 may be made by depositing or sputtering each successive layer 103-108 onto the substrate 102. Protective layer 110 is then deposited on top of layer 108. Layer 110 may be attached to layer 108 by a suitable adhesive.

In operation, laser light passes through substrate 102 and layer 103 and reaches active layer 104. A portion of the light is reflected at layer 104, a portion is absorbed by layer 104 and the remaining light passes through layer 104, through dielectric layer 106, and is reflected at reflective layer 108. This reflective light then returns through layers 106 and 104 and then destructively interferes with the light which was directly reflected off of layer 104. By choosing the materials and the thicknesses of the layers 106 and 104, the Ar achieved is less than 1. In other words, the reflectivity of the liquid and crystalline states are reversed from their bulk vlues and that of the prior art. In the preferred embodiment of the medium described above, reflectivity of liquid and crystalline states are 60% and 35%, respectively. This difference in reflectivity is sufficient for data detection by a standard type of disk drive. At the same time, the medium now automatically limits the temperature because as it melts, the liquid state reflects more and absorbs less light. When the laser light is removed the medium will cool to the amorphous state which has approximately the same reflectivity as the liquid state.

Fig. 3 shows a graph of active layer thickness versus dielectric layer thickness at different absorption ratios (Ar). The structure of the medium used in Fig. 3 was a glass substrate, a GTS active layer, a 7059 glass dielectric layer and a 100 nm (1000 Å) thick aluminum reflective layer. The optional undercoat layer was not present. Light of wavelength 647 nm was assumed to be normally incident through the substrate onto the active layer. The thickness of both active and dielectric layers was varied systematically and the ratio Ar was calculated for each thickness combination.

The results for the Ar as shown in Fig. 3 are that the thicker active layers absorb more light in the liquid state. There is a set of active layer and dielectric layer thickness values where Ar is equal to one. The structure constructed with thickness of active layer and dielectric layer falling on that line (Ar = 1) will have identical absorption for the liquid and crystalline states. However, it is a region where no contrast is observed. The best region to operate is where the Ar is at a minimum. In Fig. 2 the Ar is less than 0.6 for thin active layers and for a dielectric layer thickness intermediate between approximately 160 and 180 nm (1600 and 1800 Å). The result is that the heating rate of the molten part of the irradiated spot is less than 60% of the surrounding crystalline region. This is in contrast to a conventional structure (Ar = 1.5), where the heating rate of the melted region increases by as much as 60% above the crystalline region.

From Fig. 3 we see that if the active layer is chosen to be 10 nm (100 Å) thick, the dielectric layer should be approximately 175 nm (1750 Å) thick to minimize Ar. The liquid and crystalline states reflectivity are 60% and 35%, respectively. The reflectivity of the amorphous state is approximately equal to the reflectivity of the liquid state. These reflectivities are quite reasonable for actual detection by a disk drive. It would allow sufficient light to be reflected for focus, tracking and data detection and does not require too much power for writing and erasing data.

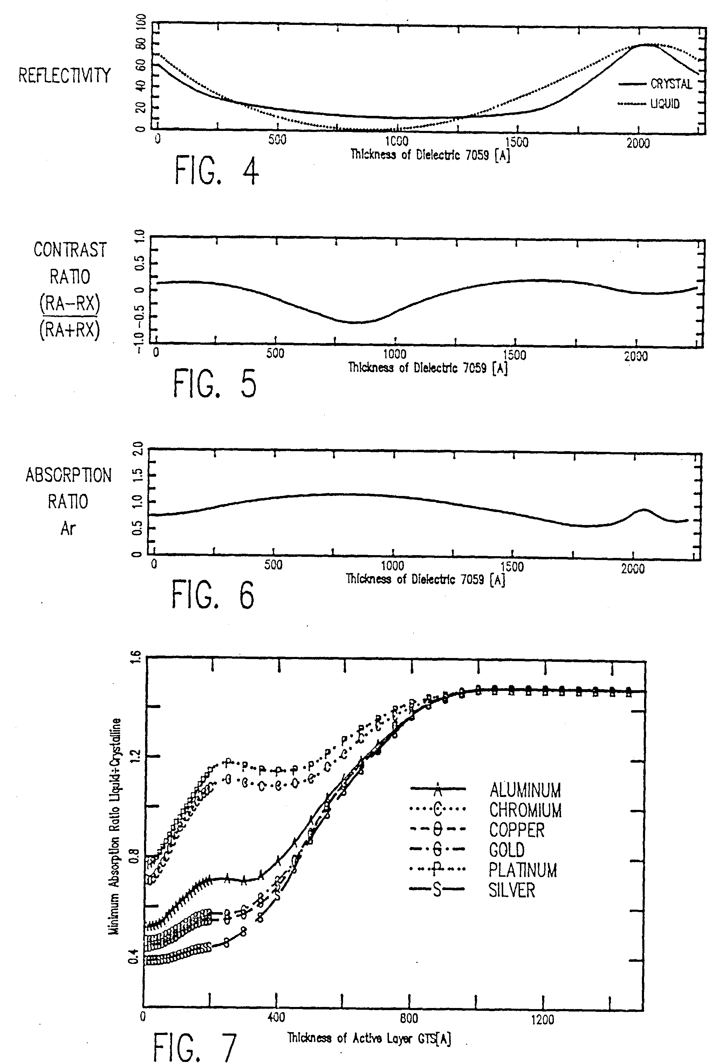

Fig. 4 shows a graph of reflectivity versus thickness of the dielectric layer for both the crystal and liquid states. The media used was the same as described in connection with Fig. 3 with a 10 nm (100 Å) thick GTS active layer. At 175 nm (1750 Å) thickness of the dielectric layer, the liquid state has its maximum reflectivity difference over the crystalline state.

Fig. 5 shows a graph of contrast ratio versus thickness of the dielectric layer. The medium used is the same as described as that in connection with Fig. 4. The contrast ratio is the reflectivity of the amorphous state (RA) minus the reflectivity of the crystalline state (RX) divided by the sum of the reflectivities of the amorphous and crystalline states. The contrast ratio is determined by reading the disk after it has been written upon. Therefore the amorphous state and not the liquid state is present. However, the reflectivity of the amorphous state is approximately equal to the reflectivity of the liquid state. The maximum contrast of 0.2 is obtained at 175 nm (1750 Å) dielectric thickness.

Fig. 6 shows a graph of absorption ratio (Ar) versus thickness of dielectric layer. The medium is as that described in connection with Fig. 4.

Some of the prior art, US 4,216,501 issued to Bell, for example, also use dielectric and reflector layers behind the active layer. However, these prior art devices all have Ar>1 and are in fact designed to maximize the Ar so as to better distinguish the data ones and zeros. However, by maximizing the Ar, the media of the prior art have the temperature problems discussed earlier because the liquid state will absorb much more light than the crystalline state.

In contrast, the present invention uses the optical properties of the active layer, dielectric layer and reflective layer to minimize the Ar. The liquid state of the active layer of the present invention absorbs much less light than the crystalline state. This solves the temperature problem and enables the media to have a longer life.

The dielectric layer thickness is chosen to minimize the ratio of liquid to crystalline state light absorption (Ar). This thickness can be increased in integer multiples of λ/2n (where λ = wavelength and n = index of refraction of the dielectric layer 106) and still result in the optical effect (Ar<1). The thickness of the active layer can be adjusted to satisfy processing considerations provided it is thin enough to allow optical interference to reverse the reflectivity of the liquid and crystalline states from their bulk values.

The present invention will work with materials other than the ones specified in the preferred embodiment. The procedure for choosing the active layer thickness and the dielectric layer thickness is the same. A calculation of the ratio of absorption of light by the liquid and crystalline states is performed using the optical constants of the chosen materials. The thickness of the layers is chosen to minimize this ratio. Any high reflecting mirror material can be used in the reflective layer. Examples include aluminum, silver, gold, copper, platinum and chromium.

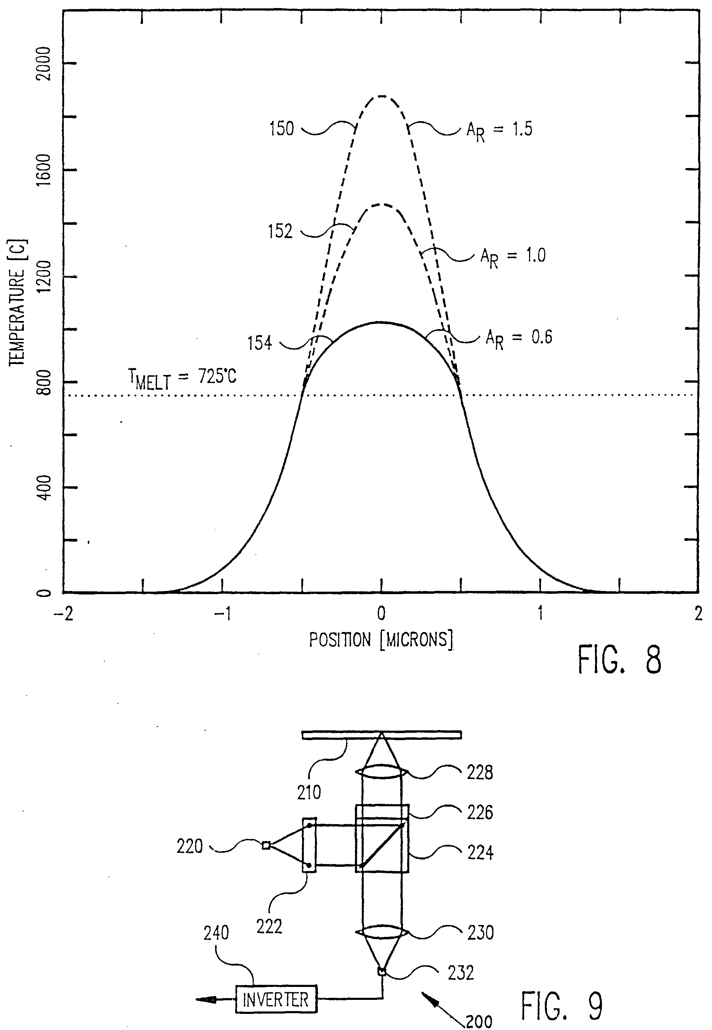

Fig. 7 shows a graph of minimum absorption ratio versus thickness of a GTS active layer for different reflective layer materials. The medium has glass substrate, a GTS active layer, a 175 nm (1750 Å) thick 7059 glass dielectric layer and a 100 nm (1000 Å) thick reflective layer. Silver gives the lowest value of Ar. For example, keeping a structure the same except for substituting a silver for an aluminum reflective layer, a lower value for Ar of 0.41 for a 10 nm (100 Å) thick active layer is obtained. The heating rate of the molten state is 41% of that of the crystalline state.

A number of materials may be used for the dielectric layer as long as they are reasonably transparent so optical interference can occur. Some materials would include SiO₂, ZnS, MgF₂ and Al₂O₃ or mixtures of these.

It was noted that the medium of the prior art has active layer temperatures approaching 1740°C. Using the structure of the present invention, with a silver reflector, a 175 nm (1750 Å) thick 7059 glass dielectric layer, and a 10 nm (100 Å) thick GTS active layer, the temperature at the center of the molten spot reaches only 1015°C when the edge, defined by the FWHM diameter of the incident beam, reaches 725°C. This 725°C reduction in maximum temperature is quite significant and results in a much longer media life. This is achieved without reducing the laser power and retaining the same large spot size.

Fig. 8 shows a graph of the temperature versus position in a beam spot focussed on an active layer. A line 150 represents the media of the prior art (Ar = 1.5). A temperature of 1740°C is obtained at the center of the spot. A line 152 represents a media in which the reflectivities of the crystalline and liquid state are the same (Ar = 1.0). A temperature of 1450°C is obtained at the center. A line 154 represent the medium 100 of the present invention (Ar = 0.6). The temperature at the center reaches only 1015°C.

Fig. 9 shows a schematic diagram of a data storage system and is designated by the general reference number 200. Drive 200 is designed for use with a disk medium of the present invention. A disk 210 is shown which is made similar to medium 100 of Fig. 2.

A laser diode 220 provides light to an optical collimator 222, such as a lens. The collimated light is then passed to a polarizing beam splitter 224 and is directed through a quarter-wave plate 226 and an objective lens 228. Objective lens 228 focuses the light on to disk 210.

The light reflected off of disk 210 passes through lens 228, quater-wave plate 226 and polarizing beam splitter 224 to a detector lens 230. Lens 230 focuses the return light to an optical detector 232. Optical detector 232 detects the different light intensities received which correspond to the recorded amorphous and crystalline regions on the disk.

In the present invention, the reflectivity of the amorphous and crystalline states are reversed from that of the prior art. The signals from detector 232 are passed through a high speed inverter 240. The resulting data signals exiting inverter 240 are thus similar to data signals received from a regular phase change optical disk drive of the prior art.

The use of the disk 210 of the present invention in drive 200 has several advantages. Writing noise is an undesirable result of variation of the position or size of the written data spot. One source of writing noise is unpredictable temperature fluctuations. These result from variation of the laser power or the optical absorption of the medium. The inverted structure of the present invention is less sensitive to writing noise. This is due to the fact that the liquid or amorphous state does not absorb as much of the incident light so it experiences less temperature (hence, spot size) variations for a given fluctuation of power or optical absorption.

Materials which crystallize more quickly such as GeTe or GeTeSb can be used in the active layer of the present invention. The cooling rate of the molten spot is higher because the maximum temperatures reached by the liquid are not as high as with a conventional structure. Less heat must diffuse out of the molten spot before it cools to the critical glass transition temperature and is quenched into an amorphous state. This allows materials such as GeTe or GeTeSb to be quenched into the amorphous state rather than immediately crystallizing. Prior to the present invention these materials would crystallize so quickly that they could not be transformed to the amorphous state, and were thus, unsuitable for use in the active layer. With these materials the disk can be rotated faster and achieve a greater media velocity. This allows data to be recorded at a higher rate.

## Claims

1. An optical recording medium comprising:
an active layer (104) comprised of an optical phase change material which is able to transmit light, having a crystalline phase capable of melting to a liquid phase and then cooling to an amorphous phase, said crystalline phase having a bulk reflectivity greater than said amorphous and liquid phases, the active layer being made of one of (GeTe)₈₅Sn₁₅, GeTe or GeTeSb;
a dielectric layer (106) overlying the active layer, said dielectric layer having a thickness such that said amorphous and liquid phases have a higher reflectivity than said crystalline phase for light incident on the medium, and
a reflective layer (108) overlying the dielectric layer.

2. The medium as claimed in claim 1 further including:
a substrate (102) located on one side of the active layer.

3. The medium as claimed in any preceding claim, wherein the dielectric layer overlaying the active layer is substantially transparent, and is of a thickness such that light passing through the active layer is reflected by the reflective layer and destructively interferes with light reflected off of the active layer so that said liquid phase reflects more light than said crystalline phase.

4. The medium as claimed in any preceding claim, wherein the dielectric layer thickness is such that the difference in reflectivity of said liquid phase and said crystalline phase is a maximum.

5. The medium as claimed in any preceding claim, wherein the active layer is approximately 10 nm (100 Å) thick and the dielectric layer is approximately 175 nm (1750 Å) thick.

6. The medium as claimed in any preceding claim, wherein the active layer is made of (GeTe)₈₅Sn₁₅ and the dielectric layer is made of glass.

7. A method for making an optical recording media comprising the steps of:
depositing an active layer (104) onto a substrate, said active layer made of a material having a noncrystalline state and a crystalline state, said material being one of (GeTe)₈₅Sn₁₅, GeTe or GeTeSb;
depositing a dielectric layer (106) onto said active layer, the thickness of said dielectric layer being such that said noncrystalline state of said active layer will reflect more light than said crystalline state of said active layer; and
depositing a reflective layer (108) onto said dielectric layer.

8. The method as claimed in claim 7, further including the steps of:
prior to depositing an active layer, depositing an undercoat layer (103) onto said substrate; and
attaching an overcoat layer (110) onto said reflective layer.

9. The method as claimed in claim 7 or 8, wherein said dielectric layer thickness is such that the difference in reflectivity of said noncrystalline state and said crystalline state is approximately at a maximum.

10. An optical data recording disk drive system comprising:
a recording medium (100) comprising a substrate (102); an active layer (104) of an optical phase change material having a noncrystalline state and a crystalline state overlying said substrate, said crystalline state having a bulk reflectivity greater than said noncrystalline state, the active layer being made of one of (GeTe)₈₅Sn₁₅, GeTe or GeTeSb; a dielectric layer (106) overlying said active layer; and a reflective layer (108) overlying said dielectric layer, wherein said dielectric layer is of a thickness such that said noncrystalline state reflects more light than said crystalline state;
light generating means (220) for producing a collimated first beam of light;
optical transmission means (222, 228) for directing said first beam of light to the medium;
optical separation means (228, 226, 224) for receiving said first beam of light and a reflected beam of light from the medium and separating said first beam from said reflected beam; and
photodetector means (232) for receiving said reflected beam of light from the optical separation means and generating a data signal responsive thereto.

11. The system as claimed in claim 10, further including;
an inverter (240) connected to the photodetector means for inverting said data signal.

12. The system as claimed in claim 10 or 11, wherein the optical transmission means and the optical separation means comprise a polarizing beam splitter (224), a quarter-wave plate (226) and a lens (228).

## Patentansprüche

1. Optisches Aufzeichnungsmedium mit:
einer aktiven Schicht (104), die aus einem optischen Phasenänderungsmaterial besteht, das in der Lage ist, Licht zu transmittieren, und eine kristalline Phase besitzt, die in der Lage ist, zu einer flüssigen Phase zu schmelzen und dann zu einer amorphen Phase abzukühlen, wobei die kristalline Phase ein größeres Volumenreflexionsvermögen als die amorphe und die flüssige Phase aufweist, wobei die aktive Schicht aus einem von (GeTe)₈₅Sn₁₅, GeTe oder GeTeSb besteht;
einer dielektrischen Schicht (106), die über der aktiven Schicht liegt, wobei die dielektrische Schicht eine derartige Dicke besitzt, daß die amorphe und die flüssige Phase ein höheres Reflexionsvermögen als die kristalline Phase für Licht besitzen, das auf das Medium einfällt, und
einer reflektierenden Schicht (108), die über der dielektrischen Schicht liegt.

2. Medium, wie in Anspruch 1 beansprucht, das des weiteren beinhaltet:
ein Substrat (102), das sich auf einer Seite der aktiven Schicht befindet.

3. Medium, wie in irgendeinem vorhergehenden Anspruch beansprucht, wobei die dielektrische Schicht, die über der aktiven Schicht liegt, im wesentlichen transparent ist und eine Dicke derart besitzt, daß Licht, das durch die aktive Schicht hindurchläuft, von der reflektierenden Schicht reflektiert wird und destruktiv mit Licht interferiert, das von der aktiven Schicht wegreflektiert wird, so daß die flüssige Phase mehr Licht reflektiert als die kristalline Phase.

4. Medium, wie in irgendeinem vorhergehenden Anspruch beansprucht, wobei die Dicke der dielektrischen Schicht derart ist, daß die Differenz des Reflexionsvermögens der flüssigen Phase und der kristallinen Phase maximal ist.

5. Medium, wie in irgendeinem vorhergehenden Anspruch beansprucht, wobei die aktive Schicht ungefähr 10 nm (100 Å) dick und die dielektrische Schicht ungefähr 175 nm (1.750 Å) dick ist.

6. Medium, wie in irgendeinem vorhergehenden Anspruch beansprucht, wobei die aktive Schicht aus (GeTe)₈₅Sn₁₅ und die dielektrische Schicht aus Glas besteht.

7. Verfahren zur Herstellung eines optischen Aufzeichnungsmediums, das die Schritte umfaßt:
Aufbringen einer aktiven Schicht (104) auf ein Substrat, wobei die aktive Schicht aus einem Material besteht, das einen nicht-kristallinen Zustand und einen kristallinen Zustand aufweist, wobei das Material eines von (GeTe)₈₅Sn₁₅, GeTe oder GeTeSb ist;
Aufbringen einer dielektrischen Schicht (106) auf die aktive Schicht, wobei die Dicke der dielektrischen Schicht derart ist, daß der nicht-kristalline Zustand der aktiven Schicht mehr Licht reflektiert als der kristalline Zustand der aktiven Schicht; und
Aufbringen einer reflektierenden Schicht (108) auf die dielektrische Schicht.

8. Verfahren, wie in Anspruch 7 beansprucht, das des weiteren die Schritte umfaßt:
Aufbringen einer Unterschicht (103) auf das Substrat vor dem Aufbringen einer aktiven Schicht; und
Anbringen einer Überschicht (110) auf die reflektierende Schicht.

9. Verfahren, wie in Anspruch 7 oder 8 beansprucht, wobei die Dicke der dielektrischen Schicht derart ist, daß die Differenz des Reflexionsvermögens des nicht-kristallinen Zustands und des kristallinen Zustands ungefähr bei einem Maximum liegt.

10. Optisches Datenaufzeichnungs-Plattenspeichersystem mit:
einem Aufzeichnungsmedium (100), das ein Substrat (102) beinhaltet; einer aktiven Schicht (104) aus einem optischen Phasenänderungsmaterial, das einen nicht-kristallinen Zustand und einen kristallinen Zustand aufweist und über dem Substrat liegt, wobei der kristalline Zustand ein Volumenreflexionsvermögen besitzt, das größer als dasjenige des nicht-kristallinen Zustands ist, und die aktive Schicht aus einem von (GeTe)₈₅Sn₁₅, GeTe oder GeTeSb besteht; einer dielektrischen Schicht (106), die über der aktiven Schicht liegt; und einer reflektierenden Schicht (108), die über der dielektrischen Schicht liegt, wobei die dielektrische Schicht eine Dicke derart besitzt, daß der nicht-kristalline Zustand mehr Licht reflektiert als der kristalline Zustand;
lichterzeugenden Mitteln (220) zum Erzeugen eines kollimierten ersten Lichtstrahls;
optischen Transmissionsmitteln (222, 228), um den ersten Lichtstrahl zu dem Medium zu führen;
optischen Separationsmitteln (228, 226, 224), um den ersten Lichtstrahl und einen reflektierten Lichtstrahl von dem Medium zu empfangen und den ersten Strahl von dem reflektierten Strahl zu separieren; und
Photodetektormitteln (232), um den reflektierten Lichtstrahl von den optischen Separationsmitteln zu empfangen und ein darauf ansprechendes Datensignal zu erzeugen.

11. System, wie in Anspruch 10 beansprucht, das des weiteren beinhaltet:
einen Inverter (240), der mit den Photodetektormitteln verbunden ist, um das Datensignal zu invertieren.

12. System, wie in Anspruch 10 oder 11 beansprucht, wobei die optischen Transmissionsmittel und die optischen Separationsmittel einen polarisierenden Strahlteiler (224), ein Lambdaviertel-Plättchen (226) und eine Linse (228) beinhalten.

## Revendications

1. Support d'enregistrement optique comprenant :
une couche active (104) constituée d'un matériau à changement de phase optique qui permet de transmettre la lumière, comportant une phase cristalline capable d'une fusion en une phase liquide puis d'un refroidissement en une phase amorphe, ladite phase cristalline présentant une réflectivité de masse supérieure auxdites phases amorphe et liquide, la couche active étant faite de l'un parmi (GeTe)₈₅Sn₁₅, GeTe ou GeTeSb,
une couche de diélectrique (106) recouvrant la couche active, ladite couche de diélectrique présentant une épaisseur telle que lesdites phases amorphe et liquide présentent une réflectivité plus élevée que ladite phase cristalline pour la lumière qui est incidente sur le support, et
une couche de réflexion (108) recouvrant la couche de diélectrique.

2. Support selon la revendication 1, comprenant en outre :
un substrat (102) situé d'un côté de la couche active.

3. Support selon l'une quelconque des revendications précédentes, dans lequel la couche de diélectrique recouvrant la couche active est pratiquement transparente, et est d'une épaisseur telle que la lumière passant au travers de la couche active est réfléchie par la couche de réflexion et interfère de façon destructive avec la lumière qui est réfléchie à partir de la couche active de sorte que ladite phase liquide réfléchit davantage de lumière que ladite phase cristalline.

4. Support selon l'une quelconque des revendications précédentes, dans lequel l'épaisseur de la couche de diélectrique est telle que la différence de réflectivité de ladite phase liquide et de ladite phase cristalline soit un maximum.

5. Support selon l'une quelconque des revendications précédentes, dans lequel la couche active est approximativement de 10 nm (100 Å) d'épaisseur et la couche de diélectrique est d'approximativement 175 nm (1750 Å) d'épaisseur.

6. Support selon l'une quelconque des revendications précédentes, dans lequel la couche active est faite de (GeTe)₈₅Sn₁₅ et la couche de diélectrique est faite de verre.

7. Procédé destiné à réaliser un support d'enregistrement optique comprenant les étapes consistant à :
déposer une couche active (104) sur un substrat, ladite couche active étant faite d'un matériau présentant un état non cristallin et un état cristallin, ledit matériau étant l'un parmi (GeTe)₈₅Sn₁₅, GeTe ou GeTeSb,
déposer une couche de diélectrique (106) sur ladite couche active, l'épaisseur de ladite couche de diélectrique étant telle que ledit état non cristallin de ladite couche active réfléchira davantage de lumière que ledit état cristallin de ladite couche active, et
déposer une couche de réflexion (108) sur ladite couche de diélectrique.

8. Procédé selon la revendication 7, comprenant en outre les étapes consistant à :
avant le dépôt d'une couche active, déposer une couche de sous-revêtement (103) sur ledit substrat, et
mettre en place une couche de revêtement (110) sur ladite couche de réflexion.

9. Procédé selon la revendication 7 ou la revendication 8, dans lequel l'épaisseur de ladite couche de diélectrique est telle que la différence de réflectivité dudit état non cristallin et dudit état cristallin est approximativement à un maximum.

10. Système d'unité de disque d'enregistrement de données optique comprenant :
un support d'enregistrement (100) comprenant un substrat (102), une couche active (104) d'un matériau à changement de phase optique présentant un état non cristallin et un état cristallin recouvrant ledit substrat, ledit état cristallin présentant une réflectivité de masse supérieure à celle dudit état non cristallin, la couche active étant faite de l'un parmi (GeTe)₈₅Sn₁₅, GeTe ou GeTeSb, une couche de diélectrique (106) recouvrant ladite couche active, et une couche de réflexion (108) recouvrant ladite couche de diélectrique, dans lequel ladite couche de diélectrique est d'une épaisseur telle que ledit état non cristallin réfléchit davantage de lumière que ledit état cristallin,
un moyen de génération de lumière (220) destiné à produire un premier faisceau de lumière collimaté,
un moyen de transmission optique (222, 228) destiné à diriger ledit premier faisceau de lumière vers le support,
un moyen de séparation optique (228, 226, 224) destiné à recevoir ledit premier faisceau de lumière et un faisceau de lumière réfléchi à partir du support et à séparer ledit premier faisceau dudit faisceau réfléchi, et
un moyen de photodétecteur (232) destiné à recevoir ledit faisceau de lumière réfléchi depuis le moyen de séparation optique et à générer un signal de données répondant à celui-ci.

11. Système selon la revendication 10, comprenant en outre,
un inverseur (240) relié au moyen de photodétecteur afin d'inverser ledit signal de données.

12. Système selon la revendication 10 ou la revendication 11, dans lequel le moyen de transmission optique et le moyen de séparation optique comprennent un séparateur de faisceau polarisant (224), une plaque quart-d'onde (226) et une lentille (228).
